# EUROPÄISCHE PATENTSCHRIFT

(11) **EP 0 638 590 B1**
(45) Veröffentlichungstag und Bekanntmachung des Hinweises auf die Patenterteilung: **03.01.2001**
(21) Anmeldenummer: 94111857.2
(22) Anmeldetag: 29.07.1994
(51) Int. Cl.: C08C 19/28

(54) **Kautschuke, Verfahren zu ihrer Herstellung, Verwendung derselben als Polymeradditiv**
Rubbers, their preparation, their use as additives for polymers
Caoutchoucs, leur préparation, leur utilisation comme additif pour polymères

(30) Priorität: 11.08.1993 DE 4326907
(43) Veröffentlichungstag der Anmeldung: 15.02.1995
(73) Patentinhaber: BAYER AG, 51368 Leverkusen (DE)
(72) Erfinder: Köhler, Burkhard, Dr., D-47829 Krefeld (DE); Grigat, Ernst, Dr., D-51381 Leverkusen (DE)

(56) Entgegenhaltungen:
- GB-A- 1 119 629
- GB-A- 1 234 230
- US-A- 4 537 917
- US-A- 5 091 467

## Beschreibung

Die Erfindung betrifft neue Kautschuke, ein Verfahren zu ihrer Herstellung und ihre Verwendung als Polymeradditiv.

Der Einsatz von Kautschuken in thermoplastischen Polymersystemen dient vorwiegend als Zähigkeitsverbesserung (siehe beispielsweise: R.B. Seymour: Adv. Chem. Ser. 222 (1989) 3-13; DE 38 42 618; DE 40 17 571; EP 0 375 389; EP 0 375 390).

Jedoch ist auch eine kompatibilisierende Wirkung von großem Interesse. Daher wurden neue modifizierte Kautschuke gesucht, die das Spektrum der bisherigen Materialien erweitern.

Polyamid-Polyolefin-Blends, speziell Polyamid-Polyethylen-Blends, sind dem Fachmann seit Jahren bekannt. Die Herstellung solcher Polyamid-Blends ist z.B. beschrieben in: Kunststoffe 65 (1975) S. 139 ff., Kunststoffe 80 (1991), S. 838 ff., EP 0 469 693.

Die Legierungen zeichnen sich dadurch aus, daß Polyamid mit 5 bis 40 Gew.-% Polyethylen und Zuhilfenahme eines Verfahrens zur Verträglichkeitsmachung (Peroxide, Blockcopolymere, Verträglichkeitsvermittler) gemischt wird. Diese Blends zeichnen sich durch erhöhte Schlagzähigkeit und verringerte Wasseraufnahme aus.

Ebenso bekannt ist die Herstellung von hochschlagzähen Polyamiden durch Compoundierung von Polyamid ausschließlich mit modifizierten Polyolefinen speziell säure- bzw. anhydrid-funktionellen Polyethylenen.

Die Verwendung hoch-ungesättigter Verträglichkeitsvermittler wird nicht gelehrt. Ebensowenig wird der Einsatz eines Maleinsäureanhydrid-modifizierten 1,2-Polybutadiens gelehrt.

Durch kautschukartige Polymeradditive wird zwar die Zähigkeit von Polymerkompositionen erhöht, der Elastizitätsmodul meist jedoch stark abgesenkt.

Es bestand daher die Aufgabe neue Polymeradditive aufzufinden, die zähigkeitsverbessernd bei geringer Einbuße an E-Modul wirken. Ferner die Polymeradditive einfach herstellbar sein, z.B. durch Pfropfungsreaktionen auf Extrudern oder Knetern und die zur Herstellung der Polymeradditive verwendeten Edukte bei Raumtemperatur fest (kristallin oder granulatförmig) sein, um eine einfache Verarbeitung zu ermöglichen.

Überraschenderweise wurde gefunden, daß mit Maleinsäureanhydrid (MSA) gepfropfte, syndiotaktische 1,2-Polybutadiene die Kerbschlagzähigkeit von Polyamiden erhöhen, ohne den E-Modul wesentlich zu beeinträchtigen und daß die mit Maleinsäureanhydrid gepfropften, syndiotaktischen 1,2-Polybutadiene als Kompatibilisatoren für Polyamid Polyethylenblends wirken.

Gegenstand der Erfindung sind daher Kautschuke, hergestellt durch Pfropfung von 99,5 bis 90 Gew.-%, vorzugsweise 99 bis 95 Gew.-%, syndiotaktische 1,2-Polybutadien mit 0,5 bis 10 Gew-% Maleinsäureanhydrid, vorzugsweise 1 bis 5 Gew.-% Maleinsäureanhydrid in der Schmelze, wobei sich die Gewichtsangaben auf 100% addieren.

Gegenstand der Erfindung ist ferner ein Verfahren zur Herstellung der erfindungsgemäßen Kautschuke, dadurch gekennzeichnet, daß 99,5 bis 90 Gew.-%, vorzugsweise 99 bis 95 Gew.-% syndiotaktisches 1,2-Polybutadien mit 0,5 bis 10 Gew.-%, vorzugsweise 1 bis Gew.-% Maleinsäureanhydrid bei Temperaturen von 160 bis 200°C in der Schmelze 20 sec bis 5 min in der Schmelze in Extrudern oder Knetern zur Reaktion gebracht wird.

Die erfindungsgemäßen Kautschuke dienen als Polymeradditive im Sinne der Erfindung.

Die Kautschuke werden z.B. zu Polymerkompositionen aus 99 bis 60 Gew.-%, vorzugsweise 97 bis 85 Gew.-% Polyamiden und 1 bis 40 Gew.-%, vorzugsweise 3 bis 15 Gew.-% Kautschuk verwendet.

Die Kautschuke werden auch z.B. zu Polymerkompositionen aus 40 bis 96 Gew.-% Polyamiden, 3,5 bis 59,5 Gew.-% Polyolefinen und 0,5 bis 40 Gew.-% Kautschuk, wobei die Summe an Gewichtsprozenten stets 100 beträgt, verwendet.

Diese Polymerkompositionen zeichnen sich durch eine hohe Schlagzähigkeit bei geringen Moduleinbußen aus.

Syndiotaktisches 1,2-Polybutadien im Sinne der Erfindung entspricht im wesentlichen der Formel 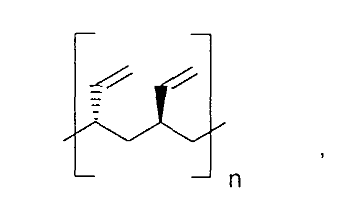 wobei das Polymer zu >90 % dieser idealisierten Formel entspricht (der Rest besteht zum größten Teil aus ataktischen Polybutadien-1,2- oder cis-Polybutadien-1,4- oder trans-Polybutadien-1,4-Einheiten).

Syndiotaktisches 1,2-Polybutadien ist bekannt (beispielsweise unter der Bezeichnung "RB 830®" von der Firma Japan Synthetic Rubber zu beziehen).

Das Polymer ist teilkristallin mit einem Schmelzpunkt >60°C und daher im Gegensatz zu anderen kautschukartigen Polybutadienen thermoplastisch verarbeitbar und stranggranulierbar. [cis-Polybutadien-1,4 ist z.B. eine (extrem) hochviskose Fküssigkeit, trans-Polybutadien-1,4 ist teilkristallin, aber nicht kautschukartig].

Die Pfropfung mit Maleinsäureanhydrid erfolgt in Extrudern oder Knetem, wie sie auch für die Verarbeitung üblicher Thermoplasten, wie z.B. Polyethylen, Polypropylen oder Polyamid 6, verwendet werden, bei Temperaturen von 160 bis 200°C in der Schmelze während 20 Sekunden bis 5 Minuten. Das ebenfalls teilkristalline Pfropfungsprodukt kann wie übliche Thermoplasten verarbeitet werden und durch Stranggranulierung in rieselfähiges, bei Raumtemperatur (bis 40°C) nicht verklebendes Granulat zerkleinert werden. Ein solches Granulat ist die Voraussetzung für eine problemlose Einarbeitung in andere Thermoplasten, wie z.B. Polyamid 6, Polyethylen oder deren Gemische. [Mit MSA gepfropftes cis-1,4-Polybutadien ist z.B. dagegen eine extrem hochviskose Flüssigkeit]. Die Zerkleinerung kann bei amorphen (d.h. nicht teilkristallinen) Polybutadienkautschuken nur unterhalb der Glastemperatur (d.h. < -80°C) erfolgen. Das Pulver klebt bei Raumtemperatur wieder zusammen. Nur mit Zusatz von Talkum oder anderen mineralischen Pulvern kann ein rieselfähiges Pulver erhalten werden.

Ein solches Pulver ist technisch schwer herstellbar (Tieftemperaturmahlung) und nicht frei von anorganischen Beimengungen (z.B. Talkum) bei Raumtemperatur handhabbar.

Die Pfropfung durch Compoundierung des syndiotaktischen 1,2-Polybutadiens mit Maleinsäureanhydrid erfolgt in üblichen Knetem oder Extrudern ohne Inertisierung oder andere von der üblichen Verarbeitung von Thermoplasten oder der Abmischung von Thermoplasten mit festen Additiven abweichenden Maßnahmen.

Das Maleinsäureanhydrid kann vorab im festen Zustand mit dem syndiotaktischen 1,2-Polybutadien gemischt werden oder durch getrennte Vorrichtungen dem Kneter oder Extruder zugeführt werden.

Polyamide Bevorzugte sind Kondensate und Cokondensate aus Caprolactam, Laurinlactam, Aminoundecansäure, Hexamethylendiamin, Trimethylhexamethylendiamin, Butylendiamin, Adipinsäure, Sebacinsäure, Azelainsäure, Pimelinsäure, Undecandisäure, Terephthalsäure, Isophthalsäure und Dimerfettsäure, vorzugsweise Polyamid 6 und Polyamid 66.

Polyolefine Bevorzugte sind Polymerisate oder Copolymerisate des Ethens, Propens und Butens-1.

### Beispiele

### Beispiel 1

### (Herstellung des erfindungsgemäßen Kautschuks)

Man compoundiert die Mischung aus 98,5 Gew.-% RB 830 (syndiotaktisches 1,2-Polybutadien) und 1,5 Gew.-% MSA bei 180°C auf einer ZSK 32 (Zweiwellenextruder der Fa. Werner und Pfleiderer). Der Polymerstrang wird abgezogen und granuliert.

### Beispiel 2

### (Polymerkomposition aus Polyamid (PA) 6 und Kautschuk)

Man extrudiert bei 280°C die Mischung aus 95 Gew.-% PA 6 (relative Lösungsviskosität (1 % in Kresol) 3,0) und 5 Gew.-% des Kautschuks aus Beispiel 1.

Die Kerbschlagzähigkeit (ISO 180) beträgt 18 kJ/m², der Zug-E-Modul (DIN 53 457) 2800 MPa.

### Vergleichsbeispiel 2a PA 6 und Lotader AX 8660®

Man extrudiert die Mischung aus 95 Gew.-% PA 6 und 5 Gew.-% Lotader 8660 (Ethen-Butylacrylat-Glycidylmethacrylatcopolymer).
Die Kerbschlagzähigkeit beträgt 10 kJ/m², der Zug-E-Modul 2700 MPa.

### Vergleichsbeispiel 2b PA 6 und Lucalen A 2920®

Man extrudiert die Mischung aus 95 Gew.-% PA 6 und 5 Gew.-% Lucalen A 2920® (Ethen-Acrylsäure-tert.-Butylacrylatcopolymer).
Die Kerbschlagzähigkeit beträgt 9 kJ/m², der Zug-E-Modul 2700 MPa.

### Beispiel 3

Polymerkomposition aus PA 6, Polyethylen und Kautschuk

Man extrudiert die Mischung aus 84 Gew.-% PA 6, 15 Gew.-% Polyethylen (Lupolen 1810® der Fa. BASF) und 1 Gew.-% Kautschuk aus Beispiel 1.
Die Kerbschlagzähigkeit beträgt 12 kJ/m² der E-Modul 2400 MPa.

### Vergleichsbeispiel 3a PA 6, Polyethylen und Lucalen A 2920®

Man extrudiert die Mischung aus 84 Gew.-% PA 6, 15 Gew.-% Polyethylen und 1 Gew.-% Lucalen A 2929®.
Die Kerbschlagzähigkeit beträgt 8 kJ/m².

## Patentansprüche

1. Kautschuke, hergestellt durch Pfropfung von 99,5 aus 90 Gew.-% syndiotaktischem 1,2-Polybutadien mit 0,5 bis 10 Gew.-% Maleinsäureanhydrid in der Schmelze, wobei sich die Gewichtsangaben auf 100% addieren.

2. Verfahren zur Herstellung der Kautschuke nach Anspruch 1, dadurch gekennzeichnet, daß 99,5 bis 90 Gew.-% syndiotaktisches 1,2-Polybutadien mit 0,5 bis 10 Gew.-% Maleinsäureanhydrid bei Temperaturen von 160 bis 200°C in der Schmelze 20 sec bis 5 min in der Schmelze in Extrudern oder Knetern zur Reaktion gebracht wird, wobei sich die Gewichtsangaben auf 100% addieren.

3. Verwendung der Kautschuke gemäß Anspruch 1 als Polymeradditiv.

## Claims

1. Rubbers prepared by grafting 99.5 to 90 wt.% of syndiotactic 1,2-polybutadiene with 0.5 to 10 wt% of maleic anhydride in the melt, wherein the data referring to weight adds up to 100 %.

2. A process for preparing rubbers according to Claim 1, characterized in that 99.5 to 90 wt% of syndiotactic 1,2-polybutadiene is reacted in the melt with 0.5 to 10 wt% of maleic anhydride at temperatures of 160 to 200 °C in the melt for 20 sec to 5 min in extruders or compounders, wherein the data referring to weight adds up to 100 %.

3. Use of the rubbers according to Claim 1 as a polymer additive.

## Revendications

1. Caoutchoucs préparés par greffage de 99,5 à 90 % en poids d'un 1,2-polybutadiène syndiotactique par 0,5 à 10 % en poids d'anhydride maléique, les pourcentages indiqués se complétant à 100 %.

2. Procédé de préparation des caoutchoucs selon la revendication 1, caractérisé en ce que l'on fait réagir dans des extrudeuses ou des malaxeurs à l'état fondu à des températures de 160 à 200°C dans des durées de 20 s à 5 min, 99,5 à 90 % en poids d'un 1,2-polybutadiène syndiotactique avec 0,5 à 10 % en poids d'anhydride maléique, les pourcentages indiqués se complétant à 100 %.

3. Utilisation des caoutchoucs selon la revendication 1 en tant qu'additifs à des polymères.
